# EUROPEAN PATENT SPECIFICATION

(11) **EP 3 347 550 B1**
(45) Date of publication and mention of the grant of the patent: **07.06.2023**
(21) Application number: 16844803.3
(22) Date of filing: 07.09.2016
(51) Int. Cl.: E04H 12/04, B27D 1/08, B32B 21/14, F16L 9/01, F16L 13/10

(54) **POLE FOR SUPPORTING A CABLE AND METHOD OF MANUFACTURING THE POLE**
MAST ZUM STÜTZEN EINES KABELS UND VERFAHREN ZUR HERSTELLUNG DES MASTEN
POTEAU

(30) Priority: 07.09.2015 SE 1551143
(43) Date of publication of application: 18.07.2018
(73) Proprietor: Pålskog Teknik AB, 590 49 Vikingstad (SE)
(72) Inventor: ANDERSSON, Lars, 590 75 Ljungsbro (SE); MÅRTENSSON, Rickard, 570 61 Ydre (SE)
(74) Representative: Ström & Gulliksson AB
(86) International application number: PCT/SE2016/050836
(87) International publication number: WO 2017/044033

(56) References cited:
- EP-A2- 0 532 376
- EP-A2- 2 003 977
- WO-A1-2016/004470
- DE-C- 631 126
- DE-C- 867 907
- GB-A- 119 337
- SE-A1- 1 230 083
- US-A- 1 954 183
- US-A- 2 296 781
- US-A- 3 963 546
- US-A- 3 963 546
- US-A- 5 438 812
- US-A- 5 746 863

## Description

### FIELD OF THE INVENTION

The present invention relates to a pole according to the preamble of claim 1, a method for manufacturing the pole according to the preamble of claim 9, and use of the pole manufactured by the method. Such a pole and such a method are known from document GB 119 337 A.

### BACKGROUND ART

Poles such as utility, power, and telegraph poles are routinely used for supporting power, telephone, internet lines, or other cables above the ground. They may also be used to support transformers and street lights. Poles may also be used as load-bearing structures for buildings and bridges, as legs in furniture, and other applications requiring poles with ample strength. Existing poles are commonly made of solid wood which is sufficiently strong and resistant to inclemental climate conditions such as high wind. However, poles made of solid wood tend to splinter, decay, or rot with time and eventually require replacement with a new wooden pole. To slow decay, existing poles are treated with the wood preservative, coal-tar creosote. However, use of this creosote is undesirable as it is a harmful, toxic substance requiring use of personal protective clothing and equipment. Use of solid wood poles therefore incurs significant cost in both financial and health terms as well as having a detrimental impact on the environment through increased logging of forests.

It would be desirable to provide an alternative pole to traditional solid wood poles that retains sufficient strength.

### SUMMARY

Accordingly, the present invention preferably seeks to mitigate, alleviate or eliminate one or more of the above-identified deficiencies in the art and disadvantages singly or in any combination and solves at least the above mentioned problems by providing in one aspect a pole for supporting furniture or a cable, according to claim 1, comprising: a plurality of truncated cones arranged in a linear array to form the pole, wherein each truncated cone receives an adjacent truncated cone within its interior; and wherein each truncated cone is formed from a veneer by moving the longitudinal edges of the veneer towards each other.

It should be realized that the term "pole" should be interpreted broadly to cover all pole-like structures.

Further advantageous embodiments are disclosed in the appended and dependent patent claims.

### BRIEF DESCRIPTION OF THE DRAWINGS

These and other aspects, features and advantages of which the invention is capable of will be apparent and elucidated from the following description of embodiments of the present invention with reference to the accompanying drawings, wherein:
Figure 1 illustrates flat veneers suitable for use in manufacturing a pole according to one embodiment of the invention;
Figure 2 illustrates additional flat veneers suitable for use in manufacturing a pole according to an embodiment of the invention;
Figure 3 shows a perspective view (top) and a side view (bottom) of a truncated cone suitable for use in manufacturing a pole according to one embodiment of the invention;
Figure 4 illustrates a perspective view (top) and a cross-sectional side view (bottom) of a cone holder used in the manufacture of a pole according to an embodiment of the invention;
Figure 5 depicts a method of manufacturing a pole according to one embodiment of the invention; and
Figure 6 shows some uses of the pole according to an embodiment of the invention.

### DETAILED DESCRIPTION

The following description focuses on an embodiment of the present invention applicable to a pole, and in particular to a telegraph pole suitable for use with lines, cables, transformers or street lights. However, it will be appreciated that the invention is not limited to these applications but may be applied to any pole used to support buildings, bridges, furniture, and wherever a pole with sufficient strength is required.

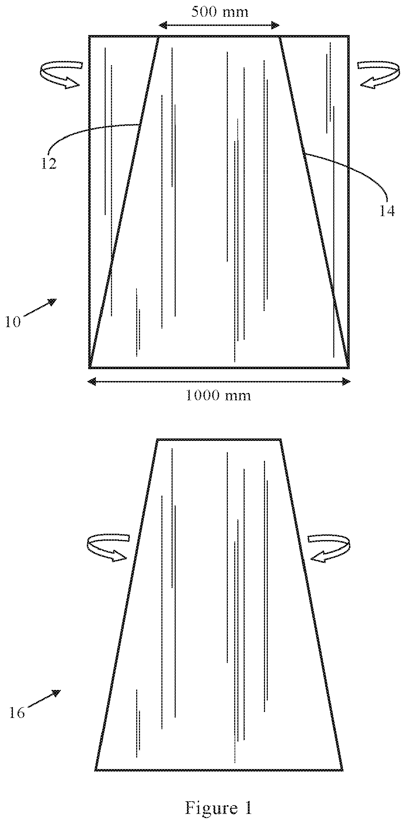

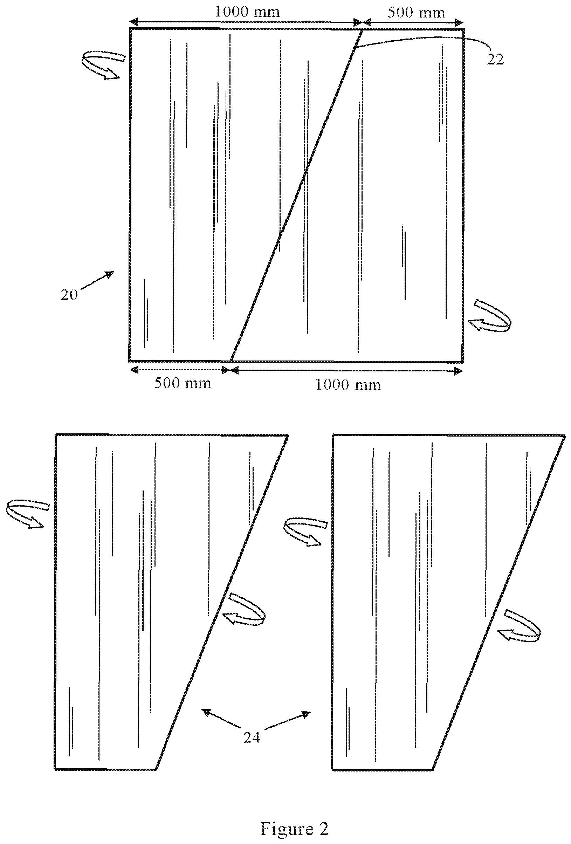

Figures 1 and 2 illustrate veneers 10, 16, 20, and 24 that are used to form truncated cones for inclusion in a pole as will be described further below. The veneer 10 in figure 1 is of a flat rectangular shape that is cut along lines 12, 14 to remove the corners and obtain veneer 16. The two corner pieces cut off from veneer 10 are discarded. Veneer 10 or veneer 16 is then rolled into a truncated cone by bringing the longitudinal edges towards each other as shown by the block arrows. The dimensions illustrate the approximate size of the veneers 10, 16 and location of cut lines 12, 14 about the veneer's longitudinal axis. Veneer 20 in figure 2 has a flat square shape before it is cut along line 22 to yield two identically shaped veneers 24. Veneer 20 or veneer 24 is then shaped into a truncated cone by bringing the longitudinal edges towards each other in the directions of the block arrows. This allows for optimal use of the veneer 20 as there is no wastage when veneer 20 is cut along cut line 22 to obtain veneers 24. Dimensions again show the approximate size of veneers 20, 24 and distance of cut line 22 from each edge.

Another veneer (not shown) suitable for rolling into a truncated cone has the dimensions:
Length: 2300 mm
Thickness: 2 mm
Width (long side): 880 mm
Width (short side): 605 mm.

The term "veneer" as used herein is intended to mean any flat sheet or thin layer of wood, or engineered wood product that may be manipulated into a three-dimensional shape for example, shaping by wrapping or rolling the veneer, without the veneer undergoing breakage. The veneer may be between 0.1 mm and 10 mm thick but is preferably between 1 mm and 5 mm thick and even more preferably between 2 mm and 3 mm thick. For example, veneers 10, 16, 20, and 24 are 2 mm thick. The lengths and widths of the veneer are not intended to be particularly limited. The dimensions disclosed above are for example only.

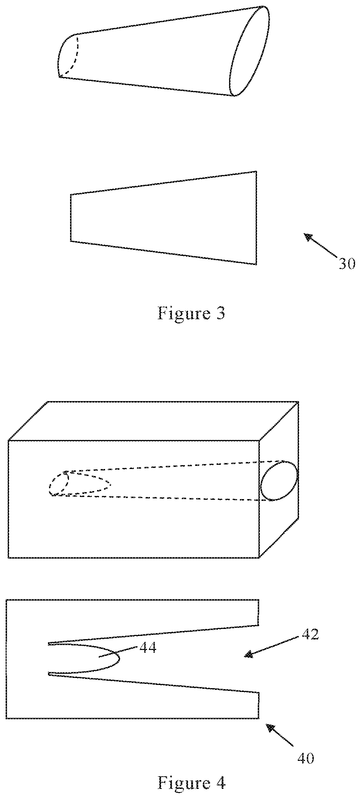

Figure 3 illustrates a truncated cone 30 that is formed from a veneer by allowing the longitudinal sides of the veneer to approach each other as described above in respect of veneers 10. 16, 20, or 24. Any suitably sized truncated cone may be used to manufacture the pole. For instance, truncated cone 30 could be obtained from veneer 10, veneer 16, veneer 20, or veneer 24. Alternatively, truncated cone 30 could be formed from a veneer having dimensions of 2300 mm (length) x 880 mm (width) x 605 mm (width) and a thickness of 2 mm. Truncated cone 30 is hollow and remains open at both circular ends. Depending on the shape of the veneer that is used, the truncated cone may have one or more small portions extending a small distance from one or both ends of the truncated conical shape (e.g. from a corner of the veneer 10 or veneer 20). Such portions may be left in place or cut off with a suitable cutting tool prior to incorporation of the truncated cone into the pole. The ends of the truncated cone need not be circular in shape. For example, the ends of the cone may have an elliptical shape.

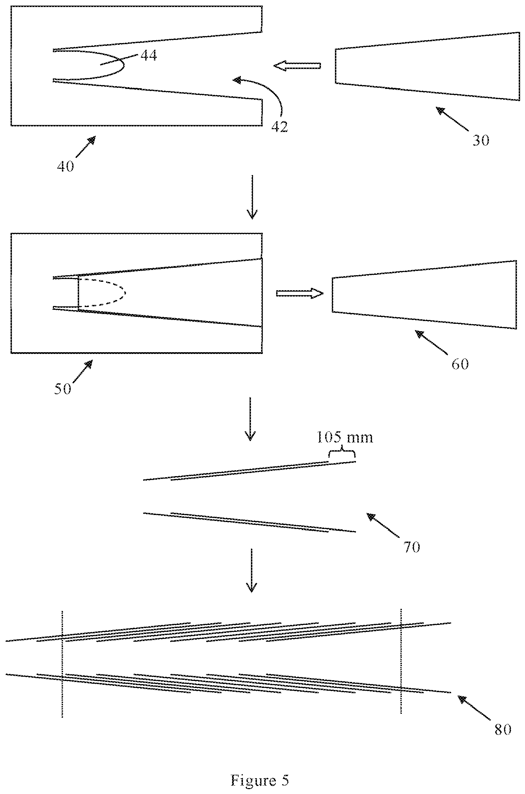

Figure 4 shows a cone holder 40 that may be used in the manufacture of a pole as will be described below with reference to figure 5. Cone holder 40 is of rectangular prismatic shape and has a conically-shaped recess 42 for reversibly receiving truncated cone 30 in use. Cone holder 40 also has a centrally arranged torpedo-shaped projection 44 extending outwards from the bottom of recess 42 for supporting the truncated cone 30 in use. Cone holder 40 may be made from any suitable material such as plastic, metal or wood and will be sized to complement the truncated cone 30. The cone holder 40 may be assembled by joining two symmetrical half pieces together for example, top and bottom half pieces each having a portion removed therefrom to form the conically-shaped recess 42 and the projection 44 upon joining of the pieces. Alternatively, recess 42 may be bored out of a solid wooden block to produce the cone holder 40. Injection molding of a plastic cone holder 40 is also possible.

A method of manufacturing a pole 80 from a plurality of truncated cones is shown in figure 5. In an initial step (not shown), a standard adhesive, e.g. wood glue, is applied over one face of a flat veneer (e.g. veneers 10, 16, 20, or 24) prior to rolling of the veneer into truncated cone 30 in order that the glue is present on the inside of the cone 30. Alternatively, the adhesive is applied after the veneer is shaped into a cone. Truncated cone 30 is then inserted into recess 42 of cone holder 40 until the smaller end of cone 30 contacts, and is held firmly about, projection 44 to form the combined holder-cone 50. The length of the cone holder 40 is greater than the length of the cone 30 in order that holder 40 covers at least the entire length of the cone 30. The outer diameter of the projection 44 corresponds to the maximum thickness of the pole 80 that is to be formed. The holder-cone combination 50 is then placed over the smaller end of, and contacted with, another truncated cone 60. It is preferred to place holder-cone combination 50 in such a way that the fiber direction of the veneer cone 30 varies with the fiber direction of the veneer cone 60. To some extent this automatically occurs due to the irregular shape of the cones 30 and 60 but by rotating the seams of cones 30 and 60 relative to each other, the fiber directions will vary even more. This variance or cross-lamination results in increased strength of the pole. After the glue on the inside of cone 30 has adhered to the outside surface of cone 60, the cone holder 40 is separated from cone 30 to yield cone array 70 which is a combination of cones 30 and 60. The circular edges of cone array 70 are omitted from figure 5 for clarity. After insertion of cone 60 into cone 30, cone 60 will protrude approximately 105 mm outside of cone 30 as shown in figure 5. However, the exact length of protrusion is dependent on veneer thickness, cone diameter, the number of veneers, and the intended use of the pole. For example, the protrusion length of cone 60 outside of cone 30 may be as little as 1 mm (when the pole is to form the leg of a piece of furniture) or up to 1000 mm (a pole for a bridge or other large construction). Thus, in some embodiments each truncated cone 60 protrudes outside of the adjacent cone 30 a distance between about 1 mm to 1000 mm, 5 mm to 750 mm, 10 mm to 500 mm, 25 mm to 400 mm, 50 mm to 250 mm, or 80 mm to 130 mm.

The steps above are repeated but with each repetition the combined cone-holder 50 is placed over and adhered to one end of the cone array 70. The cone array 70 is thus extended to form pole 80. The steps could be repeated any number of times as desired. For example, the steps could be repeated a finite number of times to form a pole 80 comprising between about 20 to 200 cones, or 50 to 150 cones, or about 100 cones. Alternatively, the steps are repeated continuously to form an infinite linear array of cones stacked one on top of each other. The infinite linear array is then cut at a pre-determined length as shown by the vertical dashed lines to form the pole 80.

Although not illustrated, it is also possible to apply the glue to the outside of a truncated cone 60 or a cone array 70 prior to contacting cone 60 or array 70 with another truncated cone 30 or holder-cone combination 50.

The plurality of truncated cones in the pole 80 may alternatively be connected to each other using screws, nuts and bolts, vacuum, tape, or staples. These mechanical connection methods could also be used in conjunction with the adhesive for attaining a pole with additional strength.

If desired, the outer surface of the pole 80 may be finished with a grinding or cutting machine to make the outer surface smooth or planar.

The pole 80 may be protected from climatic conditions (sun, wind, rain etc.) by application of a suitable protecting agent, if desired. For example, the pole 80 may be treated with lacquer or a fire retardation agent. The pole 80 could also be treated by acetylation or with a Sioo-type protection system such as that disclosed in EP 2 003 977 B1 or at www.sioo.co.uk. It is possible to dip the pole 80 in a container of a suitable polymeric protectant. An alternative to chemical treatments is to wrap the pole 80 in plastic, such as shrink-type plastic. These treatments would make the pole easier to clean and protect the pole from damage caused by birds landing thereon and bird excrements.

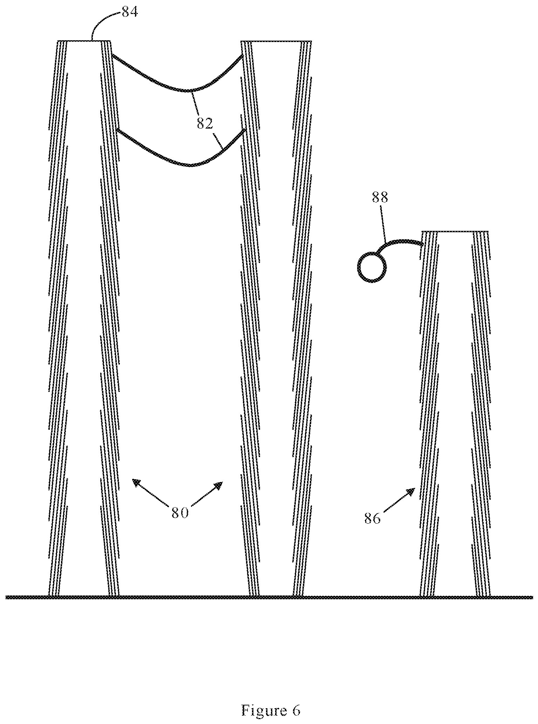

Example uses of the pole when mounted into the ground are shown in figure 6. The two taller poles 80 support a cable 82 e.g. an electricity or telecom cable. Each pole 80 has a pole cover 84 to prevent dust, water, insects or birds from entering the interior of the pole. The pole cover 84 may be made of wood, plastic or other material and glued, nailed or screwed to pole 80. Although not illustrated, each pole 80 may also have a pole cover at the bottom of the pole. The pole cover at the bottom may prevent sinking of the pole into the ground. The pole cover(s) may have one or more small holes for ventilation, if desired. The poles 80 may be mounted so that the linear array of cones points in any direction. In figure 6 the poles 80 are mounted with the arrays in opposite directions. Pole 86 is shorter than pole 80 and is used to support a street light 88.

The poles of the present invention are lightweight but strong, non-toxic to manufacture and handle, have less impact on the environment, and facilitate easy handling.

Although the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A pole (80, 86) for supporting furniture or a cable (82), comprising:
a plurality of truncated cones (30, 60) arranged in a linear array to form the pole (80,86), wherein each truncated cone (30) receives an adjacent truncated cone (60) within its interior; and
wherein each truncated cone (30, 60) is formed from a veneer (16, 24),
**characterized in that**
the veneer (16, 24) is formed from a flat sheet (10, 20) having a flat rectangular shape,
wherein the flat rectangular shaped sheet (10, 20) is cut along two straight lines (12, 14, 22) about the sheet's longitudinal axis to form one veneer (16), or
wherein the flat rectangular shaped sheet (10, 20) is cut along one straight line to form two identical shaped veneers (24), and
wherein each truncated cone (30, 60) is formed by moving the longitudinal edges of the veneer (10, 16, 20, 24) towards each other to form a longitudinal seam.

2. The pole (80, 86) according to claim 1, wherein the veneer has approximate dimensions of 2300 mm (length), 880 mm (first width), 605 mm (second width) and a thickness of 2 mm.

3. The pole (80, 86) according to claim 1 or claim 2, wherein each truncated cone (30) is adhered to an adjacent truncated cone (60).

4. The pole (80, 86) according to any one of claims 1 to 3, wherein each truncated cone (60) protrudes outside of the adjacent cone (30), preferably protruding between about 1 mm to 1000 mm, more preferably between about 80 mm to 130 mm, and even more preferably protruding by about 105 mm.

5. The pole (80, 86) according to any one of claims 1 to 4, wherein the pole (80, 86) comprises between about 20 to 200 truncated cones (30, 60), or 50 to 150 truncated cones (30, 60), or about 100 truncated cones (30, 60).

6. The pole (80, 86) according to any one of claims 1 to 5, wherein the fiber direction of the veneer forming a truncated cone (30) differs from the fiber direction of the veneer forming an adjacent truncated cone (60).

7. The pole (80, 86) according to any one of claims 1 to 6, wherein the pole (80, 86) is treated with an acetylating agent.

8. The pole (80, 86) according to any one of claims 1 to 7, further comprising at least one pole cover (84).

9. A method of manufacturing a pole (80, 86) comprising the steps of:
(a) rolling a veneer (10, 16, 20, 24) into a first truncated cone (30)
**characterized in that**
the veneer (16, 24) is formed from a flat sheet (10, 20) having a flat rectangular shape,
wherein the flat rectangular shaped sheet (10, 20) is cut along two straight lines (12, 14, 22) about the sheet's longitudinal axis to form one veneer (16), or
wherein the flat rectangular shaped sheet (10, 20) is cut along one straight line to form two identical shaped veneers (24),
wherein the truncated cone (30) is formed by moving the longitudinal edges of the veneer (10, 16, 20, 24) towards each other to form a longitudinal seam;
wherein the method of manufacturing a pole (80, 86) further comprises the steps of:
(b) placing the first truncated cone (30) over a second truncated cone (60) to form a cone array (70), wherein the second truncated cone (60) is received within the interior of the first truncated cone (30);
(c) rolling another veneer into a third truncated cone and placing the third truncated cone over the cone array (70) in order that the cone array (70) is received within the interior of the third truncated cone; and
(d) repeating step (c) a plurality of times to extend the cone array (70) thereby forming the pole (80, 86).

10. The method according to claim 9, further comprising the step of applying an adhesive to the veneer prior to rolling in order that the first and third truncated cones will be adhered to the second truncated cone (60) in step (b) or the cone array (70) in step (c).

11. The method according to claim 9 or claim 10, wherein step (c) is repeated between about 20 to 200 times, or between about 50 to 150 times, or between about 100 times.

12. The pole (80, 86) according to any one of claims 1 to 8, or a pole manufactured by the method according to any one of claims 9 to 11, wherein the veneer is selected from the group consisting of medium density fibreboard, particle board, plywood, hemp, hemp fiber board, hemp fibres, and cellulose-based products, preferably paperboard and cardboard.

13. Use of a pole (80, 86) according to any one of claims 1 to 8, or a pole manufactured by the method according to any one of claims 9 to 11, for supporting a power cable (82), a telegraph cable, a street light (88) or combinations thereof.

## Patentansprüche

1. Ein Mast (80, 86) zum Tragen von Möbeln oder einem Kabel (82), umfassend:
eine Mehrzahl von Kegelstümpfen (30, 60), die in einer linearen Anordnung angeordnet sind, um den Mast (80, 86) zu bilden, wobei jeder Kegelstumpf (30) einen benachbarten Kegelstumpf (60) in seinem Inneren aufnimmt; und wobei jeder Kegelstumpf (30, 60) aus einem Furnier (16, 24) gebildet ist, **dadurch gekennzeichnet, dass**
das Furnier (16, 24) aus einem flachen Blatt (10, 20) mit einer flachen rechteckigen Form gebildet ist, wobei das flache rechteckig geformte Blatt (10, 20) entlang zweier gerader Linien (12, 14, 22) um die Längsachse des Blattes geschnitten ist, um ein Furnier (16) zu bilden, oder wobei das flache rechteckig geformte Blatt (10, 20) entlang einer geraden Linie geschnitten wird, um zwei identisch geformte Furniere (24) zu bilden, und wobei jeder Kegelstumpf (30, 60) gebildet wird, indem die Längskanten des Furniers (10, 16, 20, 24) aufeinander zu bewegt werden, um eine Längsnaht zu bilden.

2. Mast (80, 86) nach Anspruch 1, wobei das Furnier die ungefähren Abmessungen von 2300 mm (Länge), 880 mm (erste Breite), 605 mm (zweite Breite) und eine Dicke von 2 mm aufweist.

3. Mast (80, 86) nach Anspruch 1 oder Anspruch 2, wobei jeder Kegelstumpf (30) mit einem benachbarten Kegelstumpf (60) verklebt ist.

4. Mast (80, 86) nach einem der Ansprüche 1 bis 3, wobei jeder Kegelstumpf (60) aus dem benachbarten Kegel (30) hinausragt, vorzugsweise zwischen etwa 1 mm und 1000 mm, noch bevorzugter zwischen etwa 80 mm und 130 mm und noch bevorzugter um etwa 105 mm.

5. Mast (80, 86) nach einem der Ansprüche 1 bis 4, wobei der Mast (80, 86) zwischen etwa 20 und 200 Kegelstümpfe (30, 60) oder 50 bis 150 Kegelstümpfe (30, 60) oder etwa 100 Kegelstümpfe (30, 60) aufweist.

6. Mast (80, 86) nach einem der Ansprüche 1 bis 5, wobei sich die Faserrichtung des einen Kegelstumpf (30) bildenden Furniers von der Faserrichtung des einen benachbarten Kegelstumpf (60) bildenden Furniers unterscheidet.

7. Mast (80, 86) nach einem der Ansprüche 1 bis 6, wobei der Mast (80, 86) mit einem Acetylierungsmittel behandelt ist.

8. Mast (80, 86) nach einem der Ansprüche 1 bis 7, ferner mit mindestens einer Mastabdeckung (84).

9. Verfahren zur Herstellung eines Masts (80, 86), das die folgenden Schritte umfasst:
(a) Rollen eines Furniers (10, 16, 20, 24) zu einem ersten Kegelstumpf (30), **dadurch gekennzeichnet, dass**
das Furnier (16, 24) aus einem flachen Blatt (10, 20) mit einer flachen rechteckigen Form gebildet ist, wobei das flache rechteckig geformte Blatt (10, 20) entlang zweier gerader Linien (12, 14, 22) um die Längsachse des Blattes geschnitten wird, um ein Furnier (16) zu bilden, oder wobei das flache rechteckig geformte Blatt (10, 20) entlang einer geraden Linie geschnitten wird, um zwei identisch geformte Furniere (24) zu bilden, wobei der Kegelstumpf (30) gebildet wird, indem die Längskanten der Furniere (10, 16, 20, 24) aufeinander zu bewegt werden, um eine Längsnaht zu bilden; wobei das Verfahren zur Herstellung eines Masts (80, 86) ferner die folgenden Schritte umfasst:
(b) Anordnen des ersten Kegelstumpfes (30) über einem zweiten Kegelstumpf (60), um eine Kegelanordnung (70) zu bilden, wobei der zweite Kegelstumpf (60) im Inneren des ersten Kegelstumpfes (30) aufgenommen wird;
(c) Rollen eines weiteren Furniers zu einem dritten Kegelstumpf und Platzieren des dritten Kegelstumpfes über der Kegelanordnung (70), so dass die Kegelanordnung (70) im Inneren des dritten Kegelstumpfes aufgenommen wird; und
(d) mehrmaliges Wiederholen von Schritt (c), um die Kegelanordnung (70) zu verlängern und dadurch den Mast (80, 86) zu bilden.

10. Verfahren nach Anspruch 9, das ferner den Schritt des Auftragens eines Klebstoffs auf das Furnier vor dem Rollen umfasst, damit der erste und der dritte Kegelstumpf in Schritt (b) an den zweiten Kegelstumpf (60) oder in Schritt (c) an die Kegelanordnung (70) geklebt werden.

11. Verfahren nach Anspruch 9 oder Anspruch 10, wobei Schritt (c) zwischen etwa 20 und 200 Mal oder zwischen etwa 50 und 150 Mal oder zwischen etwa 100 Mal wiederholt wird.

12. Mast (80, 86) nach einem der Ansprüche 1 bis 8 oder ein nach einem der Ansprüche 9 bis 11 hergestellter Mast, wobei das Furnier aus der Gruppe bestehend aus mitteldichten Faserplatten, Spanplatten, Sperrholz, Hanf, Hanffaserplatten, Hanffasern und Produkten auf Zellulosebasis, vorzugsweise Pappe und Karton, ausgewählt ist.

13. Verwendung eines Masts (80, 86) nach einem der Ansprüche 1 bis 8 oder eines nach einem der Ansprüche 9 bis 11 hergestellten Masts zum Tragen eines Stromkabels (82), eines Telegrafenkabels, einer Straßenlaterne (88) oder Kombinationen davon.

## Revendications

1. Poteau (80, 86) pour soutenir un meuble ou un câble (82), comprenant :
une pluralité de cônes tronqués (30, 60) agencés dans un réseau linéaire pour former le poteau (80, 86), dans lequel chaque cône tronqué (30) reçoit un cône tronqué adjacent (60) dans son intérieur ; et
dans lequel chaque cône tronqué (30, 60) est formé à partir d'un placage (16, 24),
**caractérisé en ce que**
le placage (16, 24) est formé à partir d'une feuille plate (10, 20) ayant une forme rectangulaire plate,
dans lequel la feuille de forme rectangulaire plate (10, 20) est découpée le long de deux lignes droites (12, 14, 22) autour de l'axe longitudinal de feuille pour former un placage (16), ou
dans lequel la feuille de forme rectangulaire plate (10, 20) est découpée le long d'une ligne droite pour former deux placages de formes identiques (24), et
dans lequel chaque cône tronqué (30, 60) est formé en déplaçant les bords longitudinaux du placage (10, 16, 20, 24) l'un en direction de l'autre pour former un joint longitudinal.

2. Poteau (80, 86) selon la revendication 1, dans lequel le placage a des dimensions approximatives de 2300 mm (longueur), 880 mm (première largeur), 605 mm (seconde largeur) et une épaisseur de 2 mm.

3. Poteau (80, 86) selon la revendication 1 ou la revendication 2, dans lequel chaque cône tronqué (30) est collé à un côné tronqué adjacent (60).

4. Poteau (80, 86) selon l'une quelconque des revendications 1 à 3, dans lequel chaque cône tronqué (60) fait saillie vers l'extérieur du cône adjacent (30), faisant de préférence saillie entre environ 1 mm et 1000 mm, de préférence entre environ 80 mm et 130 mm, et faisant de manière davantage préférée saillie sur environ 105 mm.

5. Poteau (80, 86) selon l'une quelconque des revendications 1 à 4, dans lequel le poteau (80, 86) comprend entre environ 20 et 200 cônes tronqués (30, 60), ou 50 et 150 cônes tronqués (30, 60), ou environ 100 cônes tronqués (30, 60).

6. Poteau (80, 86) selon l'une quelconque des revendications 1 à 5, dans lequel la direction de fibres du placage formant un cône tronqué (30) diffère de la direction de fibres du placage formant un cône tronqué adjacent (60).

7. Poteau (80, 86) selon l'une quelconque des revendications 1 à 6, dans lequel le poteau (80, 86) est traité avec un agent d'acétylation.

8. Poteau (80, 86) selon l'une quelconque des revendications 1 à 7, comprenant en outre au moins un revêtement de poteau (84).

9. Procédé de fabrication d'un poteau (80, 86) comprenant les étapes de :
(a) laminage d'un placage (10, 16, 20, 24) en un premier cône tronqué (30)
**caractérisé en ce que**
le placage (16, 24) est formé à partir d'une feuille plate (10, 20) ayant une forme rectangulaire plate,
dans lequel la feuille de forme rectangulaire plate (10, 20) est découpée le long de deux lignes droites (12, 14, 22) autour de l'axe longitudinal de feuille pour former un placage (16), ou
dans lequel la feuille de forme rectangulaire plate (10, 20) est découpée le long d'une ligne droite pour former deux placages de formes identiques (24),
dans lequel le cône tronqué (30) est formé en déplaçant les bords longitudinaux du placage (10, 16, 20, 24) l'un en direction de l'autre pour former un joint longitudinal ;
dans lequel le procédé de fabrication d'un poteau (80, 86) comprend en outre les étapes de :
(b) placement du premier cône tronqué (30) sur un deuxième cône tronqué (60) pour former un réseau de cônes (70), dans lequel le deuxième cône tronqué (60) est reçu à l'intérieur du premier cône tronqué (30) ;
(c) laminage d'un autre placage en un troisième cône tronqué et placement du troisième cône tronqué sur le réseau de cônes (70) de sorte que le réseau de cônes (70) soit reçu à l'intérieur du troisième cône tronqué ; et
(d) répétition de l'étape (c) plusieurs fois pour étendre le réseau de cônes (70) formant ainsi le poteau (80, 86).

10. Procédé selon la revendication 9, comprenant en outre l'étape d'application d'un adhésif sur le placage avant le laminage de sorte que les premier et troisième cônes tronqués vont adhérer au deuxième cône tronqué (60) dans l'étape (b) ou au réseau de cônes (70) dans l'étape (c) .

11. Procédé selon la revendication 9 ou la revendication 10, dans lequel l'étape (c) est répétée entre environ 20 et 200 fois, ou entre environ 50 et 150 fois, ou environ 100 fois.

12. Poteau (80, 86) selon l'une quelconque des revendications 1 à 8, ou poteau fabriqué par le procédé selon l'une quelconque des revendications 9 à 11, dans lequel le placage est sélectionné parmi le groupe composé de panneau de fibres, panneau de particules, contreplaqué, chanvre, panneau de fibres de chanvre, fibres de chanvre et produits à base de cellulose de densité moyenne, de préférence de carton et de carton blanchi.

13. Utilisation d'un poteau (80, 86) selon l'une quelconque des revendications 1 à 8, ou poteau fabriqué par le procédé selon l'une quelconque des revendications 9 à 11, pour supporter un câble d'alimentation (82), un câble télégraphique, un lampadaire (88) ou des combinaisons de ceux-ci.
